# EUROPEAN PATENT APPLICATION

(11) **EP 4 588 849 A1**
(43) Date of publication of application: **23.07.2025**
(21) Application number: 24153062.5
(22) Date of filing: 22.01.2024
(51) Int. Cl.: B65G 1/04

(54) **AN AUTOMATED STORAGE AND RETRIEVAL SYSTEM GRID**

(71) Applicant: AUTOSTORE TECHNOLOGY AS, 5578 Nedre Vats (NO)
(72) Inventor: Hatteland, Magne, Nedre Vats (NO); Stuhaug, Ragnar, Nedre Vats (NO); Austrheim, Trond, Nedre Vats (NO)
(74) Representative: Kilburn & Strode LLP

(57) **Abstract**

The disclosure relates to an automated storage and retrieval system grid comprising an internal space for storage of product containers and an external wall, wherein the external wall includes an operator container access opening.

## Description

### TECHNICAL FIELD

The disclosure relates to an automated storage and retrieval system grid, a product container, and a method.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

The picking and packing operations are continually susceptible to enhanced efficiency. One known approach comprises a "putwall" to which containers can be conveyed from an automated storage and retrieval system for batch packing. The putwall consists of a long, narrow wall of compartments, each holding a single order, such that an operator can pick a batch of products and add them to a batch of orders efficiently.

WO 2023/186716 discloses a storage system in which access frames are positioned between storage containers within a stack, allowing access to an underlying storage container.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5 shows an automated storage and retrieval grid according to one aspect described herein;
Fig. 6 shows a side view of an external wall including an operator container access opening; and
Fig. 7 shows a method of accessing a product container in an automated storage and retrieval system.

### DETAILED DESCRIPTION

In overview, the disclosure relates to an automated storage and retrieval system grid comprising an internal space for storage of product containers, for example, a three-dimensional grid of the type discussed herein. In addition, however, an external wall at least partially surrounds the internal space and can include an operator container access opening. As a result, a highly efficient alternative to a putwall is provided rather than having the putwall stationary in racks or in a trolley; the wall of the grid itself can be used for consolidation, and the grid logistics leveraged, such as use of the existing robots for transporting containers form the internal space to the external wall for access. Hence, for batch-picking, consolidation no longer needs to take place outside of the grid in another system. Furthermore, according to the disclosure, a product container for the grid can include a side opening for operator access to the contained products at the external wall, again permitting use of the external wall itself to be utilised further eliminating the need for conveyers such as conveyor belts next to the grid. Yet further, the disclosed approach can be used in multiple different sizes of fulfilment centre including micro-fulfilment centres, ecommerce, retail, hotel restaurant and catering, and residential usage. The approach provides a fast alternative to port operation use.

### Automated storage and retrieval system overview

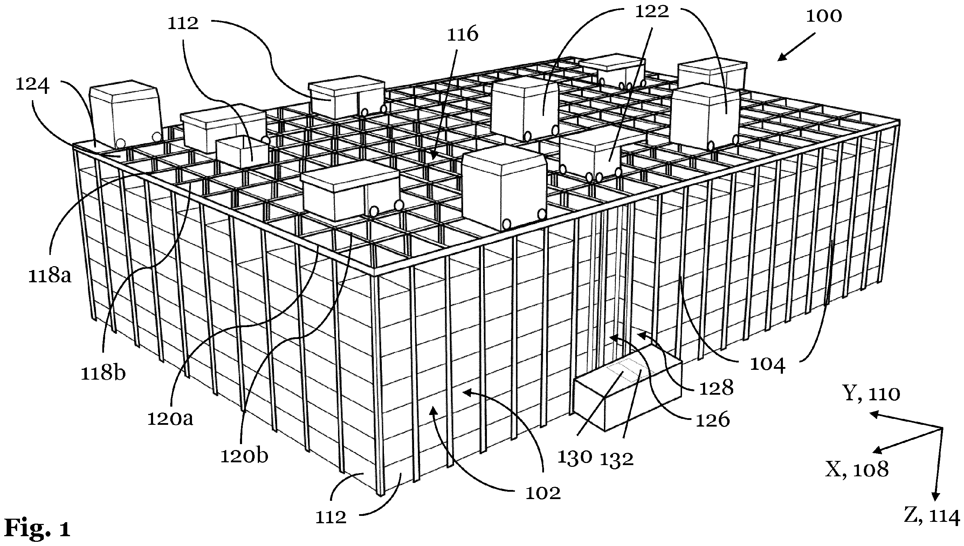

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off) and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

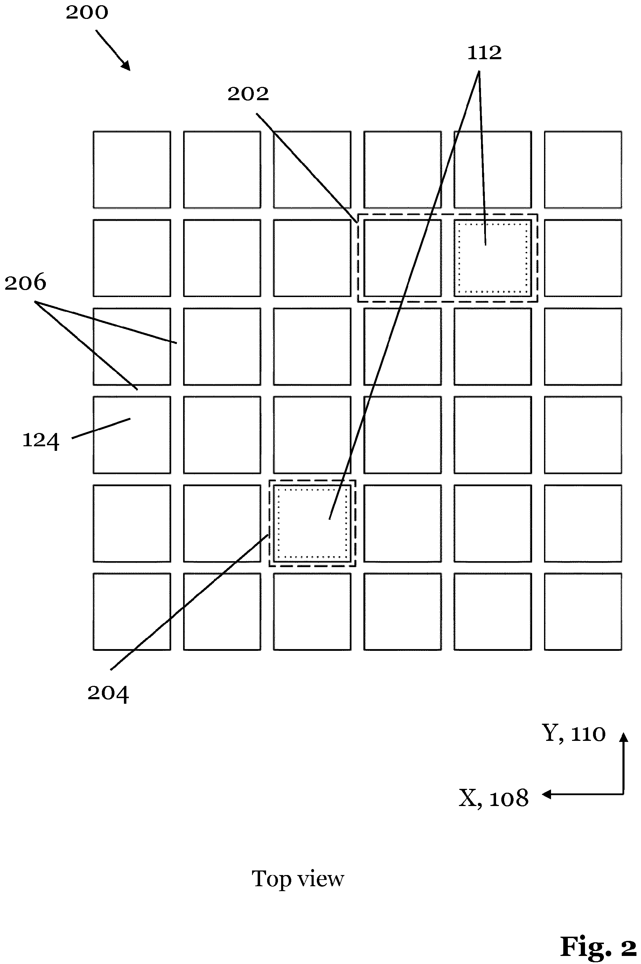

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

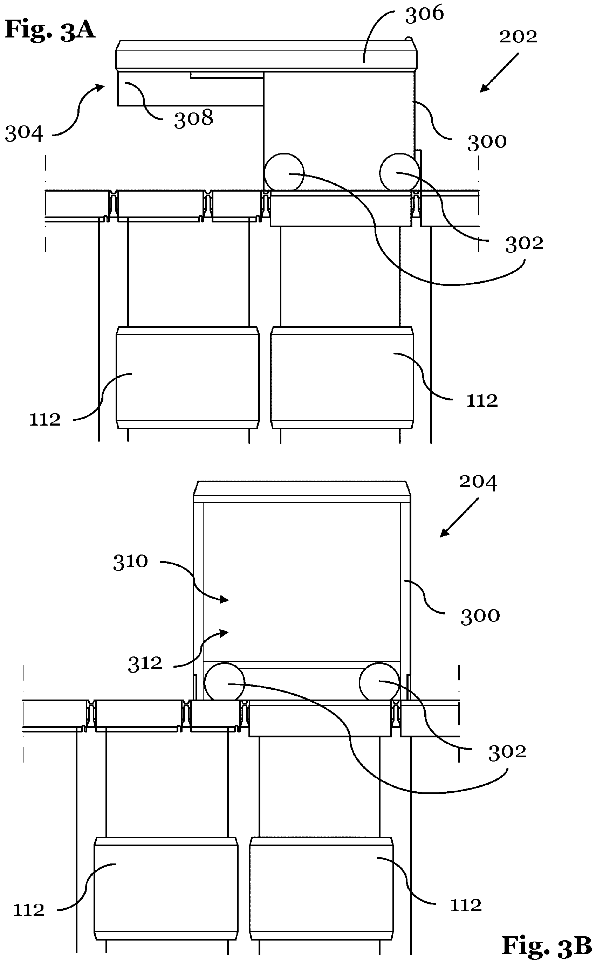

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

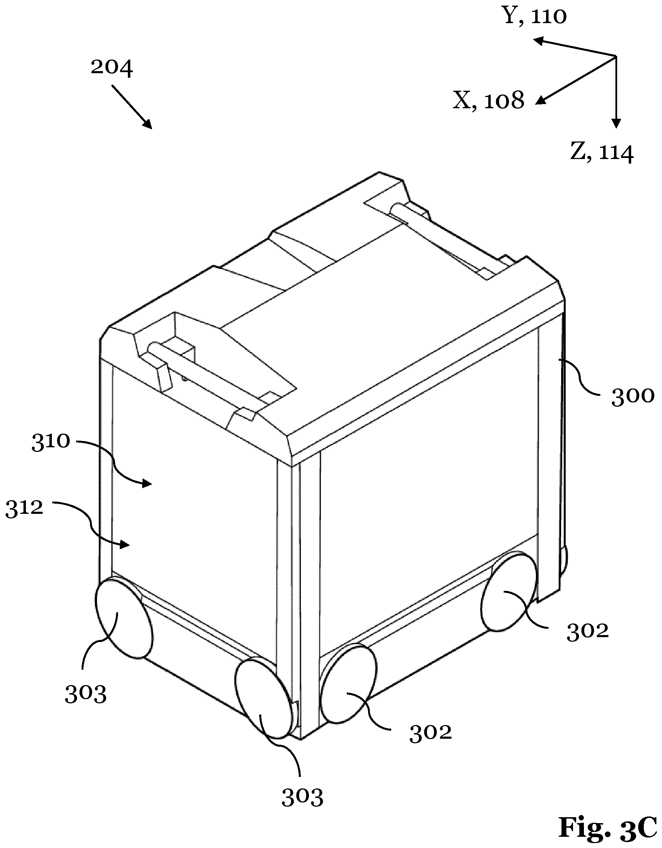

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

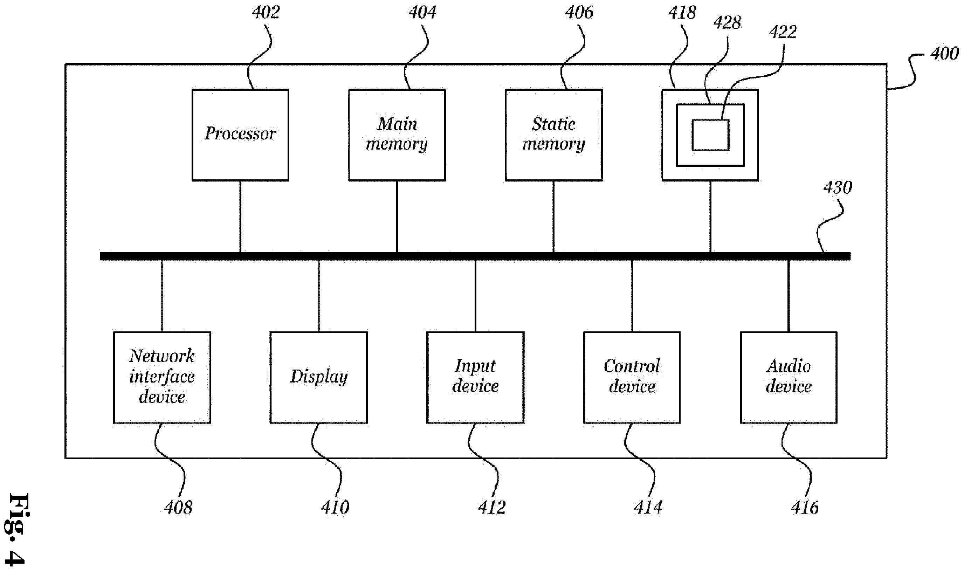

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which maybe marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### An automated storage and retrieval system grid

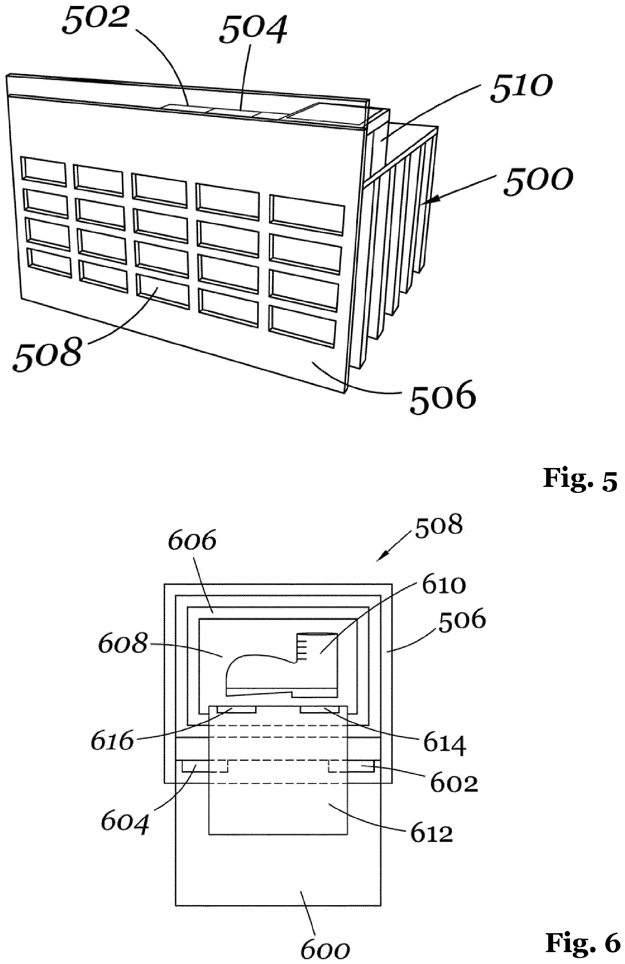

An automated storage and retrieval system grid according to the present disclosure can be understood with reference to Figs. 5 and 6. Referring to Fig. 5, a grid 500 is shown including storage columns 502, 504 forming a three-dimensional grid. Although the grid shown in Fig. 5 is small in dimension it will be appreciated that it can be scaled to any appropriate dimension and number of storage cells.

The grid 500 includes an external wall 506. In the embodiment shown, the external wall covers only one face of the grid 500 but it will be appreciated that the external wall can surround part or all of the space, or can cover part of one face of the grid 500. The external wall 506 includes an operator container access opening 508. In the embodiment shown, multiple openings are provided. Storage containers are stored in the columns 502, 504 and can be transported to columns at the external wall via a robot 510 in the manner generally described herein. For example, the containers are transported from internal columns in the internal space to external columns at the external wall along the top of the grid 500 by the robot 510.

Referring now to Fig. 6, a container access opening 508 is shown in more detail. The opening 508 is provided in a portion of the wall 506 corresponding with a location of a product container at the external wall. The opening includes a closure assembly, for example a door 600 although it will be appreciated that any appropriate closure can be provided. In the embodiment shown the door 600 is hinged by hinges 602, 604 to open downwardly. Equally the door 600 can be hinged along any edge of the opening 508, or be slidable, centrally openable or any other appropriate configuration. Manual or automatic locking means may additionally be provided for operator safety for example such that it is not possible to open the door while lifting or lowering a container or bin 606.

The container 606 is of a type stackable in columns both internal and external within the grid as discussed herein. Additionally, the container 606 includes a side opening 608 for operator access to the contained products 610 at the external wall 506. In the configuration shown, the container side opening includes a closure assembly 612 which can for example be a downwardly hinged door about hinges 614, 616 at a lower edge of the container 606. Again, the nature of the closure 612 can be any appropriate form in the manner discussed in relation to the container access opening closure 600. It will be appreciated, of course, that complementary closure arrangements are required that do not interfere with each other such that the operator is able to open both closures and access the product 610. The closure 612 can additionally include appropriate locking means for operator safety in the manner described above with reference to the operator container access opening.

### Operation of the system

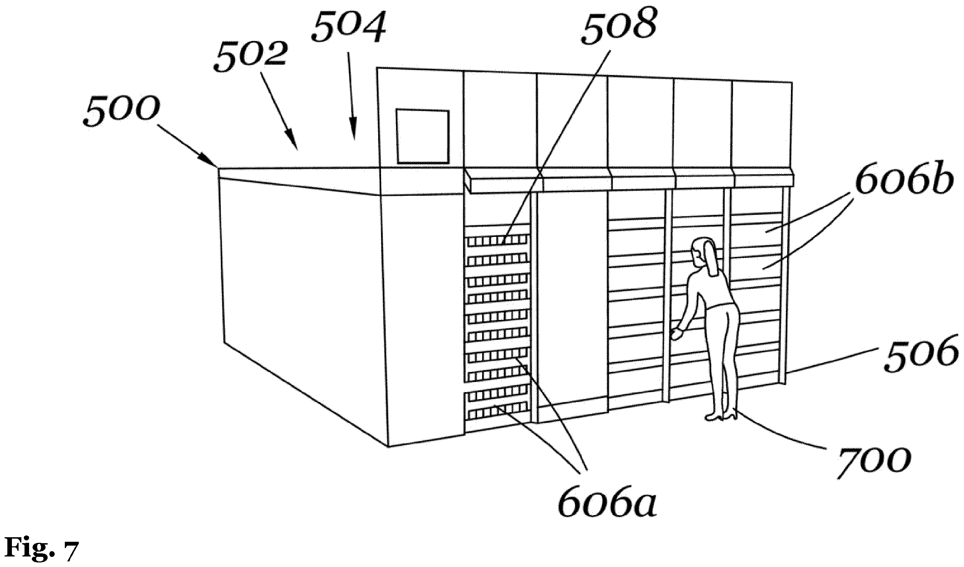

Operation of the system can be further understood with reference to Fig. 7. Grid 500 includes internal and external storage containers 502, 504 for storing stacks of containers as discussed above. An operator 700 is shown adjacent to the external wall 506 and containers 606a are shown in an open configuration and 606b in a closed configuration. It will be seen that containers 606a contain products comprising bottles, but of course any appropriate product can be stored within the containers 606a, 606b.

In operation when, for example, it is desired to perform a batch pick and pack operation, a robot (not shown) retrieves the appropriate containers 606a, 606b from an internal column and conveys them and lowers them into an external column including an operator container access opening 508. Multiple containers 606a may be presented, for example where it is desired to insert into each of them a bottle from a common batch. When operator access is desired, the appropriate safety mechanisms are activated to open any external wall and/or container opening closure as shown at 606a as opposed to 606b. The operator 700 is then able to retrieve from an appropriate location the batch of products for insertion into the relevant containers. Thereafter, the closures are activated in an appropriate manner and the containers can be lifted from the external columns, transported to internal columns and stored for onward usage.

Of course, it will be appreciated that alternative modes of operation can be achieved. For example, the operator 700 may retrieve products from the accessible containers for batch creation either between containers or to an external location.

It will be appreciated that the arrangements disclosed herein can be implemented in any appropriate automated storage and retrieval system grid having an internal space for product container storage and an external wall and of any appropriate size ranging from a remote fulfilment facility through to a small to medium enterprise or local operation or store. The grid can be specially fabricated or the system can be retrofitted to existing grid system for example by providing appropriately configured bins or containers including side containers with appropriate safety mechanisms which can for example be manually operated. Similarly, if required, closure systems can be retrofitted to existing external walls ensuring safe operator access to the container access opening. It will further be appreciated that the bins can be fabricated from any appropriate material and any appropriate manner, including both plastics and metal material dependant on use and configuration.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. An automated storage and retrieval system grid comprising an internal space for storage of product containers and an external wall, wherein the external wall includes an operator container access opening.

2. A grid as claimed in claim 1 arranged to store containers in internal columns in the internal space and external columns at the external wall.

3. A grid as claimed in claim 1 or claim 2 further comprising a product container transporter for transporting a container from an internal column to an external column.

4. A grid as claimed in claim 3 in which the transporter comprises a robotic container handling vehicle.

5. A grid as claimed in claim 4 in which the vehicle is arranged to transport containers along the top of the grid.

6. A grid as claimed in any preceding claim further comprising a container access opening closure assembly.

7. A product container configured to be stacked in a column of product containers in an automated storage and retrieval system grid comprising an internal space for storage of product containers and an external wall, the container including a side opening for operator access to the contained products at the external wall.

8. A container as claimed in claim 7 further comprising a container side opening closure assembly.

9. A grid as claimed in any of claims 1 to 6 further comprising a container as claimed in claim 7 or 8.

10. A grid as claimed in claim 9 in which the product container is arranged to be stored in an external column with the side opening adjacent the container access opening.

11. A method of accessing a product container in an automated storage and retrieval system having an internal space for storage of product containers and an external wall, the external wall including an operator container access opening, and a product container including a side opening, the method comprising the steps of:
retrieving the product container from a column in the internal space;
transporting it to a column at the external wall; and
permitting operator access to the container interior via the operator container access opening and the product container side opening.

12. A computer readable medium storing instructions which, when executed by a processor, perform the method of claim 11.
